# EUROPÄISCHE PATENTANMELDUNG

(11) **EP 2 472 184 A2**
(43) Veröffentlichungstag der Anmeldung: **04.07.2012**
(21) Anmeldenummer: 11194531.7
(22) Anmeldetag: 20.12.2011
(51) Int. Cl.: F24C 3/12, B29C 45/14

(54) **Gaszuleitungsbaugruppe, Verfahren zum Herstellen derselben und Gaskochfeld**

(30) Priorität: 27.12.2010 ES 201031951
(71) Anmelder: BSH Bosch und Siemens Hausgeräte GmbH, 81739 München (DE)
(72) Erfinder: Humbach, Thomas, 83022 Rosenheim (DE)

(57) **Zusammenfassung**

Offenbart wird ein Gaskochfeld (1), das eine Gaszuleitung (2) und mindestens eine Ventilvorrichtung (5a - 5d) aufweist, welche strömungstechnisch mit der Gaszuleitung (2) verbunden ist, wobei die Ventilvorrichtung (5a - 5d) durch Umspritzen mit der Gaszuleitung (2) verbunden wird. Ferner wird ein Verfahren zum Herstellen einer Gaszuleitung (2) des Gaskochfelds (1) offenbart.

## Beschreibung

Die vorliegende Erfindung betrifft eine Gaszuleitungsbaugruppe, ein Verfahren zum Herstellen derselben, sowie ein Gaskochfeld.

Gaskochfelder weisen typischerweise mehrere Brennervorrichtungen auf, die über eine Gaszuleitung mit Gas versorgt werden. Dabei sind an der Gaszuleitung mehrere Ventilvorrichtungen vorgesehen, die in ihrer Anzahl der Anzahl der Brennervorrichtungen entsprechen. Die Ventilvorrichtungen sind jeweils mit einem Bedienelement verbunden, und derart eingerichtet, dass der Benutzer durch Bedienen der Bedienelemente den Gaszufluss zu den einzelnen Brennervorrichtungen stufenlos einstellen kann.

Ein derartiges Gaskochfeld ist beispielsweise in der EP 0 877 206 A2 offenbart. Die Ventilvorrichtungen sind dabei über Bohrungen in der Gaszuleitung mit derselben verbunden. Nachteilig ist dabei jedoch, dass es schwierig ist, den vorgegebenen Abstand zwischen diesen Bohrungen genau einzuhalten. Ferner können sich auch Probleme hinsichtlich der Dichtigkeit am Übergang zwischen der Gaszuleitung und den Ventilvorrichtungen ergeben.

Die Gaszuleitung der in der EP 0 877 206 A2 ist aus Metall, z.B. aus Stahl gefertigt. Zur Herstellung eines solchen Stahlrohrs kann ein Stahlstreifen gerollt und dann verschweißt werden. Es handelt sich hierbei jedoch um einen relativ aufwendigen Prozess, insbesondere in Verbindung mit dem Vorsehen der oben genannten Bohrungen. Ferner ist ein weiterer Verfahrensschritt zum Verschließen und Abdichten des Endes des Stahlrohrs nötig. Gemäß der EP 0 877 206 A2 wird das Rohr hierzu mit einer Hülse und einem Stopfen verschlossen. Des weiteren kann es problematisch sein, solche Stahlrohre mit einer Krümmung, wie z.B. einem Knick bzw. Ellbogen zu versehen, da sich aufgrund der Schweißnaht Grenzen hinsichtlich der erzielbaren Geometrien ergeben, mit anderen Worten also eine solche Krümmung einen bestimmten Winkel nicht überschritten kann. Auch erfordert das Vorsehen einer solchen Krümmung einen weiteren Verfahrensschritt.

Die europäische Patentanmeldung EP 0 205 655 A1 offenbart Multigas-Ventilsätze für Gasbrenner, bei denen mehrere äquidistant beabstandete Gasventile einstückig gefertigt sind.

Vor diesem Hintergrund besteht die Aufgabe der vorliegenden Erfindung darin, ein verbessertes Gaskochfeld sowie ein Verfahren zum Herstellen desselben zu schaffen, bei dem die Anzahl der Verfahrensschritte zur Herstellung des Gaskochfelds reduziert werden kann.

Demgemäß wird ein Verfahren zum Herstellen einer Gaszuleitungsbaugruppe für ein Gaskochfeld vorgeschlagen, wobei die Gaszuleitungsbaugruppe eine Gaszuleitung und mindestens eine Ventilvorrichtung aufweist, die insbesondere strömungstechnisch mit der Gaszuleitung verbunden ist, und wobei die Ventilvorrichtung durch Umspritzen mit der Gaszuleitung verbunden wird.

Da die Gaszuleitung z.B. mit Hilfe eines Spritzgussverfahrens hergestellt werden kann, kann die Gaszuleitungsbaugruppe mit wenigen Verfahrensschritten hergestellt werden. Durch die Umspritzung ergibt sich eine formschlüssige Verbindung zwischen der Gaszuleitung und der Ventilvorrichtung, die ein hohe Dichtigkeit gewährleistet.

Während des Umspritzens kann ein durch die Ventilvorrichtung verlaufender Gaskanal, insbesondere im Bereich eines Einlasses der Ventilvorrichtung, mit Hilfe eines Werkzeugs verschlossen werden. Somit wird gewährleistet, dass während des Einspritzens von flüssigem Kunststoff beim Spritzgießen kein Kunststoff in den Gaskanal innerhalb der Ventilvorrichtung gelangt.

Das Verfahren kann dabei mindestens einen der folgenden Schritte aufweisen:
- Positionieren der Ventilvorrichtung in einer Kavität einer Spritzgussanlage;
- Einführen des Werkzeugs in den Gaskanal;
- Einspritzen von flüssigem Kunststoff in die Kavität;
- Verdrängen eines Teils des flüssigen Kunststoffs aus der Kavität zur Formung der Gaszuleitung; und
- Entfernen des Werkzeugs aus dem Gaskanal.

Ferner kann nach dem Entfernen des Werkzeugs aus dem Gaskanal in die Ventilvorrichtung ein Ventil eingesetzt werden, welches in seiner Grundstellung den Gaskanal geschlossen hält. Somit wird zum Einführen des Werkzeugs eine in der Ventilvorrichtung vorgesehene Ausnehmung zur Aufnahme dieses Ventils genutzt. Das Ventil kann beispielsweise ein elektromagnetisches Ventil sein, welches aufgrund einer Federkraft in seiner Grundstellung den Gaskanal schließt und bei Stromfluss den Gaskanal öffnet. Hierdurch kann eine Sicherheitsfunktion eingerichtet wird, die sicherstellt, dass der Gasfluss bei Erlöschen der Flamme der Brennervorrichtung unterbrochen wird.

Das Werkzeug kann beispielsweise als Stift ausgebildet sein, z.B. als Stahlstift. Ein solches Werkzeug kann einfach und kostengünstig hergestellt werden.

Das Werkzeug kann während des Einspritzen des Kunststoffs bis in eine der Gaszuleitung zugeordneten Kavität der Spritzgussanlage reichen. Somit wird sichergestellt, dass während des Einspritzens von flüssigem Kunststoff beim Spritzgießen kein Kunststoff in den Gaskanal innerhalb der Ventilvorrichtung gelangt.

Die Kavität der Spritzgussanlage kann mehrere Ventilkavitäten aufweisen, in welchen jeweils eine Ventilvorrichtung platziert wird, wobei die Ventilkavitäten vor dem Einspritzen des flüssigen Kunststoffs relativ zueinander positioniert werden. Durch eine solche modulare Anordnung der Ventilkavitäten können Gaszuleitungsbaugruppen verschiedener Ausgestaltungen mit derselben Spritzgussanlage hergestellt werden.

Die Gaszuleitung kann mit Hilfe eines Gasinnendruckverfahrens gefertigt werden. Somit kann die Gaszuleitung in einfacher Weise und ohne Schweißnaht hergestellt werden.

Die Kavität der Spritzgussanlage kann derart gestaltet sein, dass die Gaszuleitung mit einer Krümmung versehen wird. Somit kann eine gekrümmte Gaszuleitung ohne zusätzliche Verfahrensschritte hergestellt werden.

Eine entsprechende Gaszuleitungsbaugruppe für ein Gaskochfeld, weist eine Gaszuleitung und mindestens eine Ventilvorrichtung auf, welche insbesondere strömungstechnisch mit der Gaszuleitung verbunden ist, wobei die Ventilvorrichtung durch eine Umspritzung mit der Gaszuleitung verbunden ist.

Hierdurch ergeben sich die gleichen Vorteile wie bei dem oben beschriebenen Verfahren.

Die Ventilvorrichtung kann eine Ausnehmung zur Aufnahme eines Ventils aufweisen, welche derart ausgebildet ist, dass durch Einführen eines insbesondere stabförmigen Werkzeugs in die Ausnehmung der Gaskanal verschlossen werden kann. In dieser Ausnehmung kann ein elektromagnetisches Ventil angeordnet sein, welches in seiner Grundstellung den Gaskanal verschlossen hält.

Die Ventilvorrichtung kann derart ausgestaltet sein, dass durch das Einführen des Werkzeugs der Gaskanal im Bereich eines Einlasses der Ventilvorrichtung verschlossen werden kann. Weiterhin kann die Gaszuleitung eine Krümmung aufweisen.

Ferner wird ein Gaskochfeld mit einer Gaszuleitungsbaugruppe wie oben beschrieben bereitgestellt. Unter einem Gaskochfeld ist hierbei insbesondere ein Kochfeld mit mehreren gasbetriebenen Brennervorrichtungen zu verstehen.

Weitere mögliche Implementierungen der Erfindung umfassen auch nicht explizit genannte Kombinationen von zuvor oder im Folgenden bezüglich der Ausführungsbeispiele beschriebenen Merkmalen. Dabei wird der Fachmann auch Einzelaspekte als Verbesserungen oder Ergänzungen zu der jeweiligen Grundform der Kochfeldanordnung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Es zeigt dabei:
- Figur 1:: eine schematische Darstellung eines Gaskochfelds mit einer Gaszuleitungsbaugruppe in der Draufsicht;
- Figur 2 und 3:: perspektivische Ansichten eines Abschnitts der Gaszuleitungsbaugruppe;
- Figur 4:: eine perspektivische Ansicht einer Ventilvorrichtung;
- Figur 5:: eine perspektivische Ansicht eines Abschnitts der Gaszuleitungsbaugruppe;
- Figuren 6A bis 6F:: ein Verfahren zum Herstellen der der Gaszuleitungsbaugruppe des Gaskochfelds.

In den Figuren sind gleiche oder funktionsgleiche Elemente mit denselben Bezugszeichen versehen, sofern nichts anderes angegeben ist.

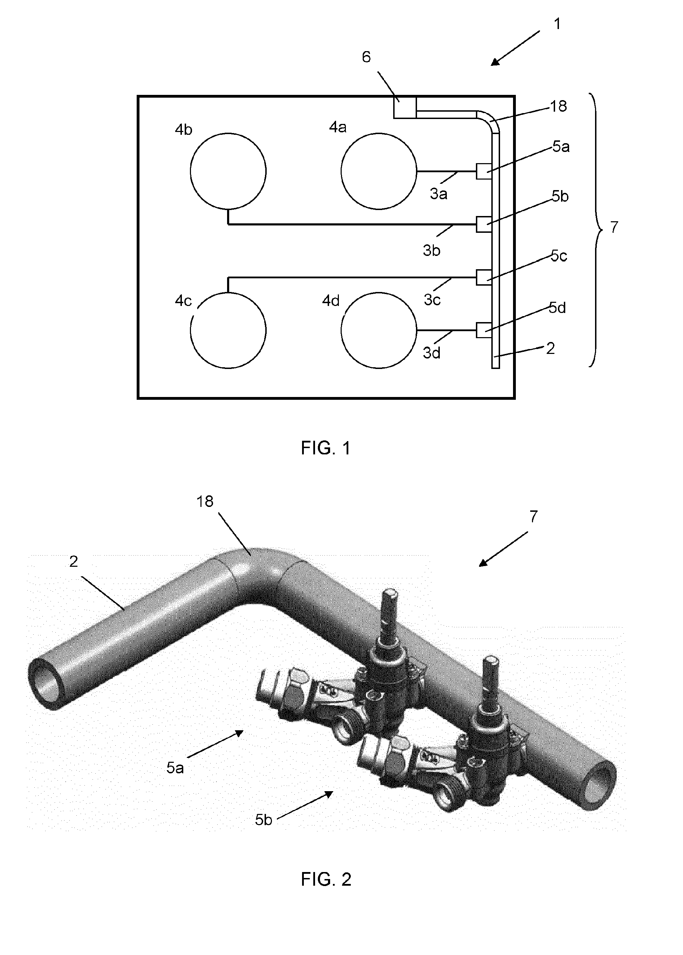

In der Figur 1 zeigt eine schematische Darstellung einer Ausführungsform eines Gaskochfelds 1 in der Draufsicht. Das in der Figur 1 dargestellte Gaskochfeld 1 kann als rechteckige Gaskochmulde ausgeführt sein und beispielsweise in einen Einbauschrank oder dergleichen eingesetzt sein. Das Gaskochfeld 1 umfasst eine Gaszuleitung 2 (welche auch als "Harnrohr" oder "Manifold" bezeichnet wird), mehrere Verteilerleitungen 3a - 3d und mehrere Brennervorrichtungen 4a - 4d, wobei jede Brennervorrichtung einer der Verteilerleitungen 3a - 3d zugeordnet ist. Im dargestellten Beispiel sind vier Verteilerleitungen 3a - 3d und vier Brennervorrichtungen 4a - 4d vorgesehen, es ist aber selbstverständlich auch möglich, eine andere Anzahl von Verteilerleitungen und Brennerleitungen, z.B. zwei oder sechs, vorzusehen. Die Verteilerleitungen 3a - 3d sind über Ventilvorrichtungen 5a - 5d mit der Gaszuleitung 2 strömungstechnisch verbunden und verbinden die Brennervorrichtungen 4a - 4d mit der Gaszuleitung 2. Die Gaszuleitung ist über ein Hauptventil 6 mit einem nicht näher dargestellten Gasanschluss verbunden. Die Gaszuleitung 2 und die Ventilvorrichtungen 5a - 5d bilden zusammen eine Gaszuleitungsbaugruppe 7.

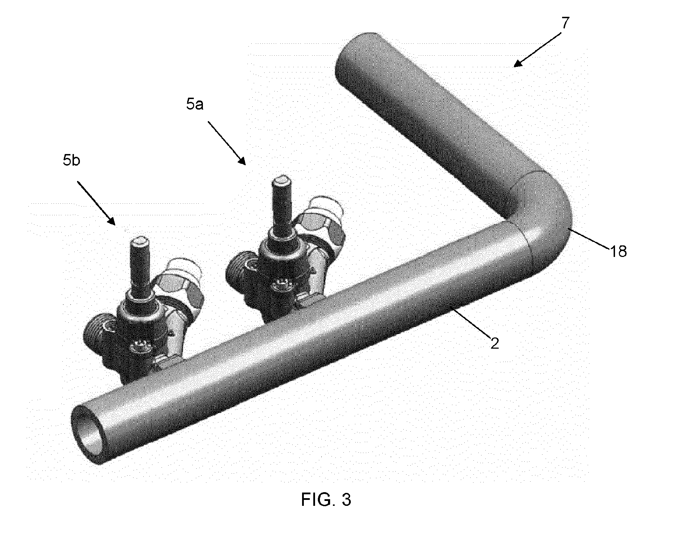

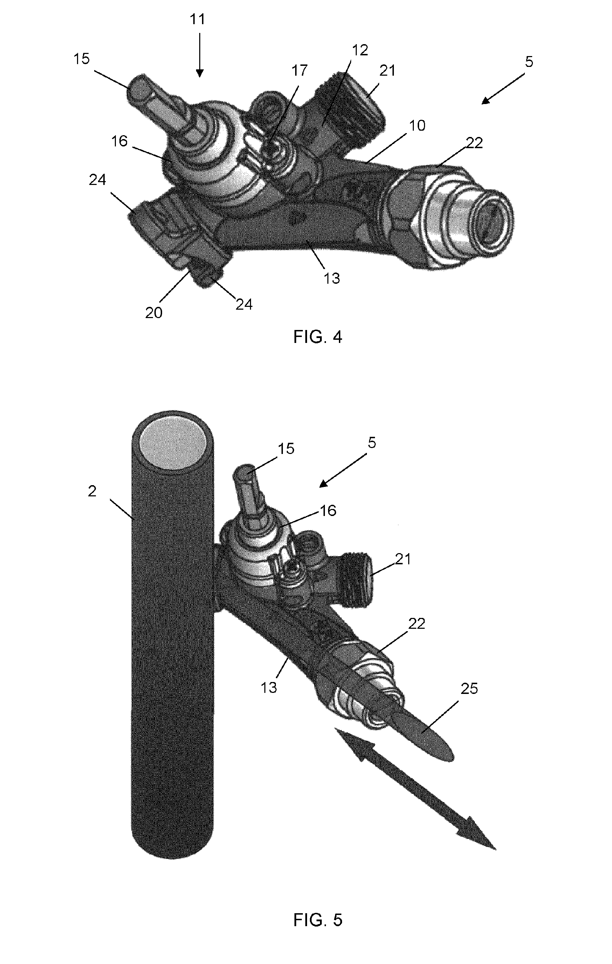

Figur 2 und Figur 3 zeigen perspektivische Ansichten eines Abschnitts der Gaszuleitungsbaugruppe 7 mit der Gaszuleitung 2 sowie zweier mit der Gaszuleitung 2 verbundener Ventilvorrichtungen 5a und 5b. Figur 4 zeigt eine perspektivische Ansicht einer Ventilvorrichtung 5.

Die Ventilvorrichtung 5 umfasst ein Gehäuse 10, in welchem zwei Ventile zur Steuerung des Gasflusses durch die Ventilvorrichtung 5 aufgenommen werden können. Zum einen ist in der Ventilvorrichtung 5 ein handbetätigtes Gasventil 11 vorgesehen, und zum anderen ist in der Ventilvorrichtung 5 eine in den Figuren 2 bis 4 nicht näher dargestellte Magneteinheit vorgesehen, mit welcher der Gasfluss durch die Ventilvorrichtung im Abhängigkeit vom Zustand der Brennervorrichtungen 4a - 4d automatisch geregelt wird. Dies wird im Folgenden näher erläutert.

Das Gehäuse 10, welches beispielsweise aus Messing gefertigt sein kann, weist einen Abschnitt 12 und einen Abschnitt 13 auf. Der Abschnitt 12 erstreckt sich im Wesentlichen orthogonal zur Gaszuleitung 2, und der Abschnitt 13 zweigt in einem Winkel von beispielsweise ca. 50° vom Abschnitt 12 ab.

Das handbetätigte Gasventil 11 weist einen Ventilschaft 15 auf, dessen oberes Ende aus dem Gehäuse 10 ragt, und der mittels eines Deckels 16 und zweier Schrauben 17 im Gehäuse 10 fixiert ist. Das Gasventil 11 ist dabei so eingerichtet, dass durch Drehung des Ventilschafts 15 die Gasdurchflussmenge durch die Ventilvorrichtung 5 stufenlos geregelt werden kann.

Beispielsweise kann der Ventilschaft 15 durch eine nicht näher dargestellte Abdeckplatte ragen und am oberen Ende des Ventilschafts 15 kann ein Bedienelement vorgesehen sein, welches dem Benutzer die Stellung des Gasventils 11 anzeigt. Das untere Ende des Ventilschafts 15 kann in einen Gaskanal ragen, durch welchen Gas von einem Einlass 20 zu einem Auslass 21 der Ventilvorrichtung 5 strömen kann. Am unteren Ende des Ventilschafts 15 kann ferner eine Ausnehmung oder ein Durchgangsloch quer zur Drehachse des Ventilschafts vorgesehen sein. In einer ersten Stellung des Ventilschafts 15 kann Gas im Gaskanal durch diese Ausnehmung oder dieses Durchgangsloch fließen, wohingegen in einer zweiten Stellung des Ventilschafts 15 die Ausnehmung oder das Durchgangsloch quer zum Gaskanal angeordnet ist, und somit das Gasventil 11 geschlossen ist. In den dazwischen liegenden Stellungen ist der Gasflusswiderstand erhöht, so dass eine stufenlose Einstellung des Gasflusses durch das Gasventil 11 ermöglicht wird.

Der durch das Gehäuse 10 verlaufende Gaskanal führt vom Einlass 20 zunächst in den geraden Gehäuseabschnitt 12, von dort in den vom Gehäuseabschnitt 12 abzweigenden Gehäuseabschnitt 13, in welchem ein elektromagnetisches Ventil vorgesehen ist, von dort aus zurück in den Gehäuseabschnitt 12 zum Gasventil 11 und schließlich zum Auslass 21. Am Auslass 21 ist ein Außengewinde vorgesehen, an welches eine Verteilerleitung 3 angeschlossen werden kann, die zu einer Brennervorrichtung 4 führt.

Das elektromagnetische Ventil ist als Magneteinheit vorgesehen, welche in den Gehäuseabschnitt 13 geschoben und mit einer Mutter 22 festgelegt werden kann. Dieses elektromagnetische Ventil hat eine sicherheitstechnische Funktion und dient dazu, den Gaszufluss zu unterbrechen, wenn die Flamme der dazugehörigen Brennervorrichtung gelöscht ist. Hierzu kann beispielsweise an der Brennervorrichtung ein Temperatursensor vorgesehen sein, welcher zum Beispiel einen Bimetallstreifen aufweist, der sich in Abhängigkeit von der Temperatur verformt und einen Stromkreis öffnet oder schließt. Das elektromagnetische Ventil weist eine Magnetspule auf, die Teil dieses Stromkreises ist, sowie einer Feder. Das elektromagnetische Ventil wird mittels dieser Feder in einer Grundstellung gehalten, in welcher der Gaskanal im Bereich des Gehäuseabschnitts 13 komplett geschlossen ist. Ist die Brennervorrichtung in Betrieb, dann wird aufgrund der von der Brennervorrichtung erzeugten Wärme das Bimetall des Temperatursensors verformt, so dass der Stromkreis geschlossen wird. Somit fließt ein Strom durch die Magnetspule, wodurch eine elektromagnetische Kraft erzeugt wird, die gegen die Federkraft der Feder wirkt und das elektromagnetische Ventil öffnet, so dass Gasfluss durch den Gaskanal ermöglicht wird. Wird nun die Flamme an der Brennervorrichtung gelöscht, dann wird keine Wärme mehr von der Brennervorrichtung abgegeben, so dass das Bimetall in seinen Ausgangszustand zurückkehrt, der Stromkreis geöffnet wird, und kein Strom mehr durch die Magnetspule fließt. Folglich schließt sich das elektromagnetische Ventil und der Gasfluss durch den Gaskanal wird blockiert. Auf diese Weise wird eine Sicherheitsfunktion realisiert, welche die Gaszufuhr automatisch kurz nach einem Erlöschen der Flamme an der Brennervorrichtung löscht.

Am Einlass 20 sind zwei gegenüberliegend voneinander angeordnete Vorsprünge 24 vorgesehen, welche sich im Wesentlichen radial zur Achse des Gehäuseabschnitts 12 nach außen erstrecken. Im eingebauten Zustand sind diese Vorsprünge 24, also der Ventileingang, zumindest abschnittsweise vom Kunststoff der Gaszuleitung 2 umgeben bzw. umspritzt, so dass eine formschlüssige Verbindung zwischen der Gaszuleitung 2 und der Ventilvorrichtung 5 gebildet wird.

Die Gaszuleitung 2 wird mit Hilfe eines Gasinnendruckverfahrens aus Kunststoff gefertigt, wie im Folgenden noch genauer erläutert werden wird. Hierdurch ergibt sich der Vorteil, dass in der Gaszuleitung 2 keine Schweißnähte vorhanden sind und eine hohe Dichtigkeit mit wenig Aufwand gewährleistet werden kann. Auch am Übergang zwischen Gaszuleitung 2 und Ventilvorrichtungen 5 kann somit eine hohe Dichtigkeit erreicht werden. Als Kunststoff für die Gaszuleitung 2 kann hierbei ein Polyamidkunststoff oder dergleichen verwendet werden.

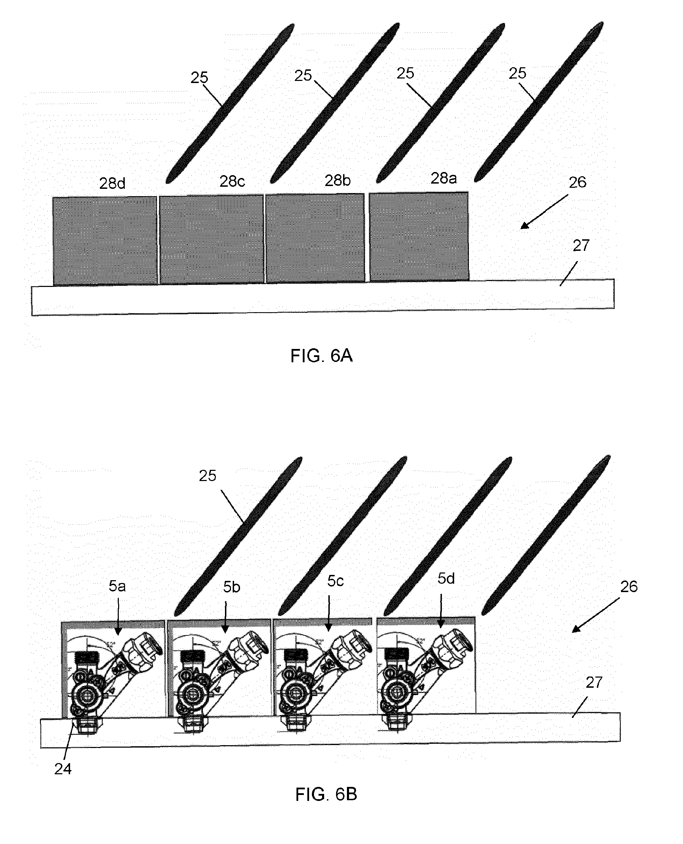

Im Folgenden wird ein Verfahren zum Herstellen des oben beschriebenen Gaskochfelds unter Bezugnahme auf die Figuren 5 und 6A bis 6F erläutert. Die Figur 5 zeigt schematisch das Einführen eines Werkzeugs 25 in den Gehäuseabschnitt 13 der Ventilvorrichtung 5. Die Figuren 6A bis 6F illustrieren ein Verfahren zum Herstellen der der Gaszuleitungsbaugruppe 7 des Gaskochfelds 1.

Das Verfahren zum Herstellen der Gaszuleitungsbaugruppe 7 macht sich die Tatsache zunutze, dass im Zustand, in welchem die Magneteinheit mit dem elektromagnetischen Ventil noch nicht in die Ventilvorrichtung 5 eingebaut ist, das Werkzeug 25 in den Gehäuseabschnitt 13 eingeführt werden kann und im Bereich des Einlasses 20 der Gaskanal mit dem Werkzeug 25 verschlossen werden kann.

Figur 6A illustriert schematisch die untere Platte 26 einer Gussform einer Spritzgussanlage zur Herstellung der Gaszuleitung 2 des Kochfelds 1. Die untere Platte 26 besitzt eine Gaszuleitungskavität 27, welche der negativen Form beispielsweise einer Hälfte der Gaszuleitung 2 entspricht, sowie mehrere Ventilkavitäten 28a - 28d, welche der negativen Form der Ventilvorrichtungen 5a - 5d entsprechen. Die Ventilkavitäten 28a - 28d sind hierbei lediglich schematisch dargestellt.

In einem in Figur 6B dargestellten ersten Schritt werden die Ventilvorrichtungen 5a - 5d in die Ventilkavitäten 28a - 28d eingelegt. Die Ventilkavitäten 28a - 28d sind dabei so angeordnet, dass die Vorsprünge 24 ins Innere der Gaszuleitungskavität 27 ragen. Somit wird erreicht, dass die Einlässe 20 mit den Vorsprüngen 24 der Ventilvorrichtungen 5a - 5d nach dem Spritzgussvorgang vollständig umspritzt sind und sich eine formschlüssige Verbindung zwischen der Gaszuleitung 2 und den Ventilvorrichtungen 5a - 5d ergibt.

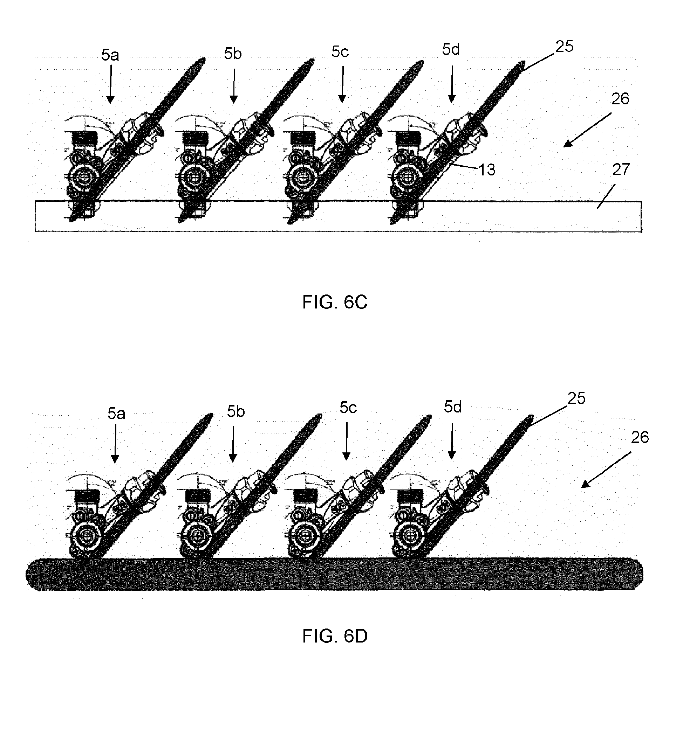

In einem in Figur 6C dargestellten zweiten Schritt werden Werkzeuge 25 in den Gehäuseabschnitt 13 eingeführt. Die Werkzeuge 25 können beispielsweise als zylindrische Stahlstifte ausgeführt sein, deren Durchmesser dem Durchmesser des Gaskanals am Einlass 20 entspricht. Somit wird erreicht, dass der Einlass 20 bei eingeführtem Werkzeug 25 vollständig verschlossen ist, so dass beim Spritzgussvorgang kein Kunststoff in das Innere der Ventilvorrichtungen 5a - 5d dringt. Ferner fixieren die Werkzeuge 25 die Ventilvorrichtungen 5a - 5d in ihren Kavitäten. Die Werkzeuge 25 können an ihrem vorderen Ende angespitzt oder angeschrägt sein, was das Einführen in das Gehäuse 10 erleichtert. Im vollständig eingeführten Zustand reichen die Werkzeuge 25 durch die Einlässe 20 bis ins Innere der Gaszuleitungskavität 27.

In einem in Figur 6D dargestellten dritten Schritt wird, nach Schließen der Kavitäten z.B. durch Platzierung einer oberen Platte auf der unteren Platte, von einer Seite der Gaszuleitungskavität 27 geschmolzener Kunststoff in die Gaszuleitungskavität 27 eingespritzt. Es sollte beachtet werden, dass die Gaszuleitungskavität 27 in den Figuren 6A - 6D lediglich schematisch dargestellt ist. Beispielsweise kann die Gaszuleitungskavität 27 mit einer nicht näher dargestellten Krümmung versehen sein, deren Form einer Krümmung 18 in der Gaszuleitung 2 entspricht. Somit kann die Gaszuleitung 2 ohne zusätzliche Verfahrensschritte in die gewünschte Form gebracht werden, und es ist nicht nötig, durch Biegen oder dergleichen eine Krümmung in der Gaszuleitung 2 vorzusehen.

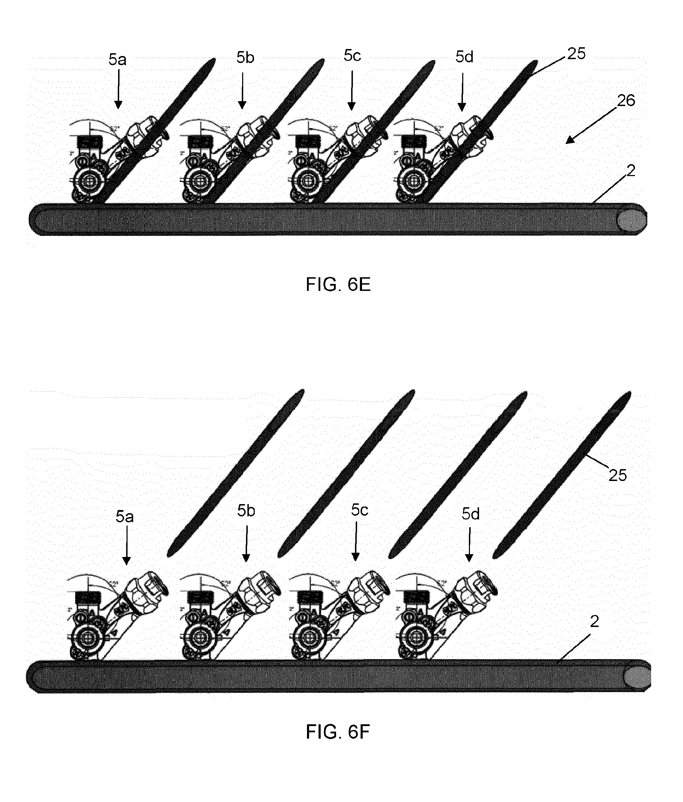

In einem in Figur 6E dargestellten vierten Schritt wird aus dem Inneren der Gaszuleitungskavität 27 ein Teil der Kunststoffschmelze verdrängt, so dass in der Gaszuleitungskavität 27 ein von einer Kunststoffwand begrenzter Hohlraum gebildet wird. Dies wird dadurch erreicht, dass ein Füllstoff, wie z.B. ein inertes Gas (z.B. Stickstoff) oder Wasser in die Gaszuleitungskavität 27 injiziert wird, so dass dieser Füllstoff als inneres Formstück bzw. Matrize wirkt. Dabei wird flüssiger Kunststoff durch entsprechende Öffnungen aus der Gaszuleitungskavität 27 gedrängt. Während dieses Schrittes sind die Gaskanäle an den Einlässen 20 der Ventilvorrichtungen 5a - 5d jeweils durch die Werkzeuge 25 verschlossen, so dass kein flüssiger Kunststoff in das Innere der Ventilvorrichtungen 5a - 5d dringt.

Nach Erkalten des Kunststoffes, verbleibt eine rohrförmige Gaszuleitung 2, aus welcher in einem fünften und letzten Verfahrensschritt, wie in Figur 6F dargestellt, die Werkzeuge 25 herausgezogen werden. Somit wird der Gaskanal im Bereich des Einlasses 20 wieder geöffnet und eine strömungstechnische Verbindung zwischen der Gaszuleitung und dem Gehäuseabschnitt 13 bzw. dem Gaskanal im Gehäuseabschnitt 13 hergestellt. Danach wird die hergestellte Baugruppe 7 aus der Spritzgussanlage entnommen. Somit wird eine Gaszuleitung 2 bereitgestellt, wobei die Ventilvorrichtungen 5a - 5d durch Umspritzen (auch als "Overmolding" bezeichnet) formschlüssig mit der Gaszuleitung 2 verbunden sind. Die somit hergestellte Gaszuleitungsbaugruppe 7 aus Gaszuleitung 2 und Ventilvorrichtungen 5a - 5d kann anschließend in ein wie in Figur 1 dargestelltes Gaskochfeld 1 eingebaut werden. Dabei wird ein elektromagnetisches Ventil in den Gehäuseabschnitt 13 eingeführt und die Ventilvorrichtungen 5a - 5d werden mit Verteilerleitungen 3a - 3d mit den Brennervorrichtungen 4a - 4d verbunden. Das oben beschriebene Verfahren bietet mehrere Vorteile:

Zunächst kann die Anzahl der Verfahrensschritte im Vergleich zu Verfahren, in denen die Gaszuleitung aus einem Metallrohr gefertigt ist, reduziert werden. Die Gaszuleitung kann durch einen einfachen Spritzgussvorgang gefertigt werden, was weniger aufwändig ist, als ein Metallrohr zu rollen und zu verschweißen.

Es müssen auch ferner keine Bohrungen in der Gaszuleitung 2 vorgesehen werden, um daran die Ventilvorrichtungen 5 vorzusehen, was die Herstellung weiter vereinfacht. Da solche Bohrungen entfallen, entstehen auch keine Metallspäne in der Gaszuleitung 2 an, die in einem weiteren Arbeitsschritt entfernt werden müssten. Weiterhin können die relativen Positionen der Ventilvorrichtungen 5a - 5d durch die Positionierung der Ventilkavitäten 28a - 28d in einfacher Weise genau ausgerichtet werden, wohingegen die genaue Platzierung von Bohrungen im Metallrohr schwierig ist. Schließlich ist durch das Umspritzen auch eine hohe Dichtigkeit gewährleistet und die Gefahr von Leckagen wird durch die formschlüssige Verbindung verringert. Auch treten keine Schweißlinien im Rohr auf. Hingegen erfordert eine Verbindung der Ventilvorrichtungen mit einem Metallrohr weitere Dichtelemente, wie z.B. Muffen oder dergleichen erfordert, was den Aufwand und Kosten erhöht.

Das hier vorgeschlagene Herstellungsverfahren hat noch weitere Kostenvorteile: So sind die Materialkosten für eine Gaszuleitung aus Kunststoff niedriger als bei einem Metallrohr. Ferner entfallen mehrere Komponenten, wie z.B. Schrauben und Brackets, die bei einem Anschrauben der Ventilvorrichtungen an die Gaszuleitung nötig sind, was nicht nur die Kosten verringert, sondern auch den Prozess wesentlich vereinfacht, da diese Elemente an der Montagelinie nicht bereitgehalten werden müssen. Die Reduzierung der Anzahl der Arbeitsschritte führt zu weiteren Kosteneinsparungen. Ferner können die Arbeitsschritte des Spritzgussprozesses weitgehend automatisiert werden, was eine weitere Kostenreduzierung ermöglicht. Insgesamt ergibt sich der Vorteil, dass der komplette Montagevorgang für die Gaszuleitungsbaugruppe aus Gaszuleitung und Ventilvorrichtungen in den oben beschriebenen Spritzgussvorgang verlagert wird. Der beschriebene Herstellungsprozess vereinfacht auch das Outsourcen der Herstellung der Gaszuleitungsbaugruppe und der bedarfsbezogenen Anlieferung an die Montagelinie des Gaskochfelds.

Ein weiterer Vorteil besteht darin, dass die aus Kunststoff gefertigte Gaszuleitung 2 leichter ist als eine aus Metall gefertigte Gaszuleitung. Da die Geometrie der Gaszuleitung 2 flexibel an die Gaskochmulde angepasst werden kann, kann auch eine höhere Stabilität erzielt werden.

In einer Variante des oben beschriebenen Herstellungsverfahrens können die Kavitäten 28a - 28d für die Ventilvorrichtungen 5 modular eingerichtet und relativ zueinander verschiebbar sein, so dass mit derselben Spritzgussanlage Gaszuleitungen für unterschiedliche Modelle von Gaskochfeldern realisiert werden können. Genauer gesagt können in einem dem oben beschriebenen ersten Schritt vorgelagerten Schritt zunächst die Ventilkavitäten 28a - 28d relativ zueinander positioniert werden. Dabei müssen die Ventilkavtitäten 28a - 28d und somit die resultierenden Ventilvorrichtungen 5a - 5d nicht notwendigerweise alle auf derselben Seite angeordnet sein. Es können auch weiterhin ein oder mehrere Module für Krümmungen oder dergleichen in der Gaszuleitung 2 vorgesehen sein, die in diesem Schritt angepasst werden. Somit können mit derselben Spritzgussanlage unterschiedliche Gaszuleitungsgeometrien realisiert werden. Ferner ist es auch beispielsweise möglich, am Ende der Gaszuleitung 2 ein Gewinde oder dergleichen vorzusehen.

### Verwendete Bezugszeichen:

- 1: Gaskochfeld
- 2: Gaszuleitung
- 3a - 3d: Verteilerleitungen
- 4a - 4d: Brennervorrichtungen
- 5a - 5d: Ventilvorrichtungen
- 6: Hauptventil
- 10: Gehäuse
- 11: Gasventil
- 12, 13: Gehäuseabschnitte
- 15: Ventilschaft
- 16: Deckel
- 17: Schrauben
- 18: Krümmung
- 20: Einlass
- 21: Auslass
- 22: Mutter
- 24: Vorsprünge
- 25: Werkzeug
- 26: untere Platte
- 27: Gaszuleitungskavität
- 28a - 28d: Ventilkavitäten

## Patentansprüche

1. Verfahren zum Herstellen einer Gaszuleitungsbaugruppe (7) für ein Gaskochfeld (1), wobei die Gaszuleitungsbaugruppe (7) eine Gaszuleitung (2) und mindestens eine Ventilvorrichtung (5a - 5d) aufweist, die mit der Gaszuleitung (2) verbunden ist, **dadurch gekennzeichnet, dass** die Ventilvorrichtung (5a - 5d) durch Umspritzen mit der Gaszuleitung (2) verbunden wird.

2. Verfahren nach Anspruch 1, **dadurch gekennzeichnet, dass** während des Umspritzens ein durch die Ventilvorrichtung (5a - 5d) verlaufender Gaskanal mittels eines Werkzeugs (25) verschlossen wird.

3. Verfahren nach Anspruch 1 oder 2, **gekennzeichnet durch**:
- Positionieren der Ventilvorrichtung (5a - 5d) in einer Kavität (27, 28a - 28d) einer Spritzgussanlage;
- Einführen des Werkzeugs (25) in den Gaskanal;
- Einspritzen von flüssigem Kunststoff in die Kavität (27, 28a - 28d);
- Verdrängen eines Teils des flüssigen Kunststoffs aus der Kavität (27, 28a - 28d) zur Formung der Gaszuleitung (2); und
- Entfernen des Werkzeugs (25) aus dem Gaskanal.

4. Verfahren nach Anspruch 3, **dadurch gekennzeichnet, dass** nach dem Entfernen des Werkzeugs (25) aus dem Gaskanal in die Ventilvorrichtung (5a - 5d) ein Ventil eingesetzt wird, welches in seiner Grundstellung den Gaskanal geschlossen hält.

5. Verfahren nach einem der Ansprüche 3 oder 4, **dadurch gekennzeichnet, dass** das Werkzeug (25) als Stift ausgebildet ist.

6. Verfahren nach einem der Ansprüche 3 bis 5, **dadurch gekennzeichnet, dass** das Werkzeug (25) während des Einspritzen des Kunststoffs bis in eine der Gaszuleitung (2) zugeordneten Kavität (27) der Spritzgussanlage reicht.

7. Verfahren nach einem der Ansprüche 3 bis 6, **dadurch gekennzeichnet, dass** die Kavität (27, 28a - 28d) der Spritzgussanlage mehrere Ventilkavitäten (28a - 28d) aufweist, in welchen jeweils eine Ventilvorrichtung (5a - 5d) platziert wird, wobei die Ventilkavitäten (28a - 28d) vor dem Einspritzen des flüssigen Kunststoffs relativ zueinander positioniert werden.

8. Verfahren nach einem der Ansprüche 1 bis 7, **dadurch gekennzeichnet, dass** die Gaszuleitung (2) mit Hilfe eines Gasinnendruckverfahrens gefertigt wird.

9. Verfahren nach einem der Ansprüche 1 bis 8, **dadurch gekennzeichnet, dass** die Gaszuleitung (2) mit einer Krümmung versehen wird.

10. Gaszuleitungsbaugruppe (7) für ein Gaskochfeld (1), aufweisend:
eine Gaszuleitung (2); und
mindestens eine Ventilvorrichtung (5a - 5d), welche strömungstechnisch mit der Gaszuleitung (2) verbunden ist,
**dadurch gekennzeichnet, dass** die Ventilvorrichtung (5a - 5d) durch eine Umspritzung mit der Gaszuleitung (2) verbunden ist.

11. Gaszuleitungsbaugruppe (7) nach Anspruch 10, **dadurch gekennzeichnet, dass** die Ventilvorrichtung (5a - 5d) eine Ausnehmung zur Aufnahme eines Ventils aufweist, welche derart ausgebildet ist, dass durch Einführen eines insbesondere stabförmigen Werkzeugs (25) in die Ausnehmung der Gaskanal verschlossen werden kann.

12. Gaszuleitungsbaugruppe (7) nach Anspruch 11, **dadurch gekennzeichnet, dass** in der Ausnehmung ein elektromagnetisches Ventil angeordnet ist, welches in seiner Grundstellung den Gaskanal verschlossen hält.

13. Gaszuleitungsbaugruppe (7) nach Anspruch 11 oder 12, **dadurch gekennzeichnet, dass** durch das Einführen des Werkzeugs (25) der Gaskanal im Bereich eines Einlasses (20) der Ventilvorrichtung (5a - 5d) verschlossen werden kann.

14. Gaszuleitungsbaugruppe (7) nach einem der Ansprüche 10 bis 13, **dadurch gekennzeichnet, dass** die Gaszuleitung (2) eine Krümmung aufweist.

15. Gaskochfeld (1), **dadurch gekennzeichnet, dass** das Gaskochfeld (1) eine Gaszuleitungsbaugruppe (7) nach einem der Ansprüche 11 bis 14 aufweist.
